# EUROPEAN PATENT SPECIFICATION

(11) **EP 3 555 434 B1**
(45) Date of publication and mention of the grant of the patent: **20.05.2020**
(21) Application number: 17724344.1
(22) Date of filing: 17.05.2017
(51) Int. Cl.: F01L 3/06

(54) **POPPET VALVE AND METHOD FOR PRODUCTION THEREOF**
TELLERVENTIL UND VERFAHREN ZUR HERSTELLUNG DAVON
SOUPAPE CHAMPIGNON ET SON PROCÉDÉ DE PRODUCTION

(43) Date of publication of application: 23.10.2019
(73) Proprietor: Federal-Mogul Valvetrain GmbH, 30890 Barsinghausen (DE)
(72) Inventor: MAREAU, André, 67200 Strasbourg (FR); BUTSCHER, Nicolas, 67190 Gresswiller (FR); BINCKLY, Marc, 67130 Wisches (FR); MATHIEU, Damien, 67570 Rothau (FR); SCHRÖDTER, Tobias, 30161 Hannover (DE)
(74) Representative: Becker & Kurig Partnerschaft Patentanwälte PartmbB
(86) International application number: PCT/EP2017/061819
(87) International publication number: WO 2018/210416

(56) References cited:
- DE-A1-102014 219 917
- JP-U- S61 116 108

## Description

### Technical Field

The present invention relates to valves, specifically poppet valves for combustion engines, which are provided with protrusions, e.g. wings, on the valve stem. It also relates to a corresponding method for producing poppet valves.

### Background of the Invention

The stem of a poppet valve of a combustion engine may be provided with wings, i.e. blades, fins or ribs, on the valve stem for guiding the gas flow. On an outlet valve wings lead to an acceleration of the gas flow at the exhaust system. For inlet valves wings generate a vortex in the air-fuel mixture or the combustions gas leading to a better distribution of the mixture in the combustion chamber. Simultaneously the gas flow exerts a force on the wings leading to a (small) rotation of the valve, which means a homogenous wear of the seat of the valve and aids in avoiding leakage of gas and fuel during the life time of the engine.

Currently there exist several different methods for producing poppet valves with wings. In one method a ball is first upset in the middle of the stem and subsequently machined, usually by milling. In another method a very big head section (i.e. big enough to encompass the head and wings) is forged, which is subsequently machined (e.g. milled) to obtain the valve head and the wings. A further method consists in first upsetting a small ball in the middle of the stem and then to forge the wings. Yet another production method is to use a mechanical upsetter and to forge the rough stem into four or five steps and subsequently to machine the wings and the head.

These production methods have several disadvantages: they are rather complicated; often material needs to be removed in an additional machining step; and the material of the wings has to be the same as the material of the valve body.

DE 102014219917 A1 and JP S61 116108 U disclose poppet valves having a guiding contour arranged on a fillet portion in order to generate a vortex. In the case of DE 102014219917 A1 the guiding contour may be attached with the aid of a welding bead.

Therefore, objective of the present invention is to provide poppet valves and a production method of poppet valves with wings on the stem which avoids these problems.

### Summary of the Invention

The objective is achieved by a poppet valve for a combustion engine according to independent claim 1 and by a method for production of a poppet valve for a combustion engine according to independent claim 7; dependent claims relate to preferred embodiments.

The poppet valve comprises a valve body having a valve stem and a valve head, and at least one protrusion of a predetermined shape located on an outer surface of said valve stem; wherein said at least one protrusion is formed by at least one weld seam obtained by depositing material on said outer surface of said valve stem using a welding process.

In a further aspect of the present invention the material of said at least one protrusion is different from the material of said valve body. According to the invention, the said at least one protrusion comprises several weld seams which are superimposed.

In another aspect said at least one protrusion can comprise weld seams of different materials.

According to the invention, said at least one protrusion has the shape of a wing.

In another aspect the height of said wing can vary along a length direction of said wing.

In another aspect the width of said wing can vary along a length and/or height direction of said wing.

In another aspect said at least one wing can be inclined with respect to an axial direction.

The objective is further achieved by a method for production of a poppet valve for a combustion engine, comprising providing a valve body having a valve stem and a valve head; and depositing material on an outer surface of said valve stem using a welding process, such that at least one protrusion of a predetermined shape is formed by at least one weld seam.

In a further aspect the method of the present invention can comprise providing said material in the form of a powder material, wherein said welding process comprises laser welding.

In another aspect of the method the material of said at least one protrusion can be different from the material of the valve body.

According to the invention, the method comprises superimposing several weld seams in order to form said at least one protrusion.

In another aspect the method can further comprise providing different materials and forming weld seams of different materials.

In another aspect the method can further comprise machining of said valve stem before said step of depositing material.

In another aspect the method can further comprise machining of said at least one protrusion after said step of depositing material.

According to a further aspect of the present invention it is provided poppet valve for a combustion engine comprising a valve body having a valve stem and a valve head, and at least one protrusion located on an outer surface said valve stem; wherein said poppet valve is produced using any one of the above methods.

In the context of the present application an axial direction is defined by the longitudinal axis of the valve stem, which is also the axis of the poppet vale; a radial direction is perpendicular to the axial direction. Further, in the context of the present application, protrusions having the shape of a wing are also simply denoted as 'wings'.

### Brief Description of the Drawings

The invention will now be described in further detail with reference to the drawings. In the drawings,
Fig. 1 shows a side view and a top view of a poppet valve according to the present invention;
Fig. 2 shows a side view of another poppet valve according to the present invention;
Fig. 3 shows a side view of a further poppet valve according to the present invention;
Fig. 4 illustrates the build-up process of a protrusion according to the production method of the present invention; and
Fig.5 shows a flow-chart of the method according to the present invention.

### Detailed Description of the Invention

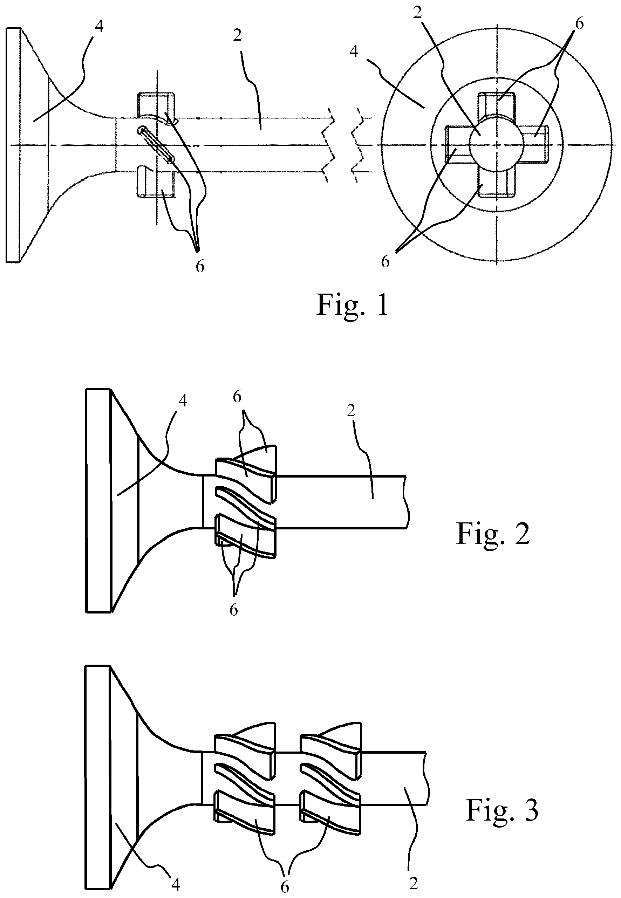

Figs. 1, 2 and 3 show exemplary embodiments of poppet valves according the present invention. The poppet valves (in the following also simply denoted as valves) depicted therein comprise a valve body having a valve stem 2 and a valve head 4. Protrusions 6 of different predetermined shapes are located on an outer surface of the stem 2 of each of the valves shown. Generally one or more protrusions can be located on the outer surface of the valve stem 2. This at least one protrusion is formed by at least one weld seam 8 using a cladding method as described below. According to this method the at least one protrusion is in particular formed by superimposing several weld seams, which allows forming the at least one protrusion 6 with a predetermined shape.

Fig. 1 shows on the left hand side a side view of a valve as well as a top view of the valve on the right hand side. Four protrusions 6 are equally spaced located on a circumference of the stem. The protrusions 6 have the shape of straight wings (blades), which are inclined with respect to the axial direction. Clearly, instead of 'four' any other number of protrusions 6 is conceivable, as long as their production is feasible, e.g. the number cannot be too high, otherwise the protrusions would overlap.

Fig. 2 shows a side view of a poppet valve. On an outer surface of the valve stem 2 there are several protrusions 6 formed, which are located in an equally spaced manner on the circumference of the stem. Again, the protrusions 6 have the shape of wings, which in this case are not only inclined with respect to the axial direction, but are also curved along a length direction of the wings.

Fig. 3 shows a side view of another poppet valve, wherein the shape of the protrusions 6 and positioning on the valve stem 2 is similar to Fig. 2. The only difference being that two sets of wings 6 are located at different distances from the valve head 4. This 'multi propeller valve' is an example for a configuration of the protrusions that would be hard to produce by methods previously known in the art.

Although the protrusions/wings 6 shown in Figs. 1-3 have the same shape in each of the figures and are distributed in a symmetric manner in each figure, more general configurations are possible. For example different protrusions on one valve can have different shapes, their distance from the valve head can be different, their distribution in the circumferential direction can be non-uniform, their inclination angle with respect to the axial direction can be different, or their heights/widths can be different.

The dimensions of the at least one protrusion having the shape of a wing may vary. A wing is considered as being a flat, blade-like object extending mainly in two dimensions and having a width orthogonal to these two dimensions. A height of a wing is defined as its extension in the radial direction of the valve, i.e. as extension/height relative to the outer surface of the valve stem. A length of a wing is defined as its extension along the outer surface of the valve stem, i.e. orthogonal to the width and the height. All these parameters can vary within one protrusion. For example the height of a wing can vary along the length direction and/or its width can vary along its length and/or height direction. The wings can be inclined with respect to the axial direction, preferably curved.

Protrusions with shapes different from wings are also possible. An example are ribs, e.g. annular ribs, ribs extending parallel to the axial direction, or ribs which are inclined with respect to the axial direction. Again, width, height and length of the ribs may be different for different ribs and width and height may vary within one rib.

The valve body and the protrusion(s) are preferably made from a valve steel. More preferably the material of the valve body is selected from X50 (DIN 1.4882), X53 (DIN 1.4871), X45 (1.4718), NC20 (DIN 2.4952), X85 (DIN 1.4748), 3015 and 2512 NbN; and the material of the at least one protrusion is selected, independently of the material of the valve body, from X50 (DIN 1.4882), X53 (DIN 1.4871), X45 (1.4718), NC20 (DIN 2.4952), X85 (DIN 1.4748), X60 (DIN 1.4785), INCONEL® 718 (the numbers in the brackets indicate the respective material number for each material).

The material may vary within the at least one protrusion, since the material can be different for different weld seams. This allows a section by section adjustment of the technical properties of the at least one protrusion. Different protrusions of one valve may also be made from different materials, for example the material could depend on the shape of the respective protrusion (if there are protrusions of different shape located on one valve) or on its distance from the valve head.

The method, according to the present invention, to produce poppet valves with at least one protrusion on stem comprises providing a valve body having a valve head and a valve stem (i.e. a blank) and building-up at least one protrusion by depositing material using a welding process - i.e. by cladding or weld cladding - on an outer surface of the stem. The valve body can be produced by a method known in the art, e.g. with a forging process. The depositing of the material is done by a welding process, using preferably laser welding. The material is preferably applied in a powder form and/or is preferably different from the material of the valve body.

This method allows a very efficient production process, which is fast and requires less energy and less material than currently used production methods for poppet valves with protrusions. The shape of the protrusion(s) after the cladding will be very close to the final shape, meaning that less, or even no, machining is necessary. This is particularly advantageous for high alloy materials, for which a machining operation is hard to perform. A further advantage is that the material of the at least one protrusion can be different from the material of the valve body; see above for a list of preferred materials.

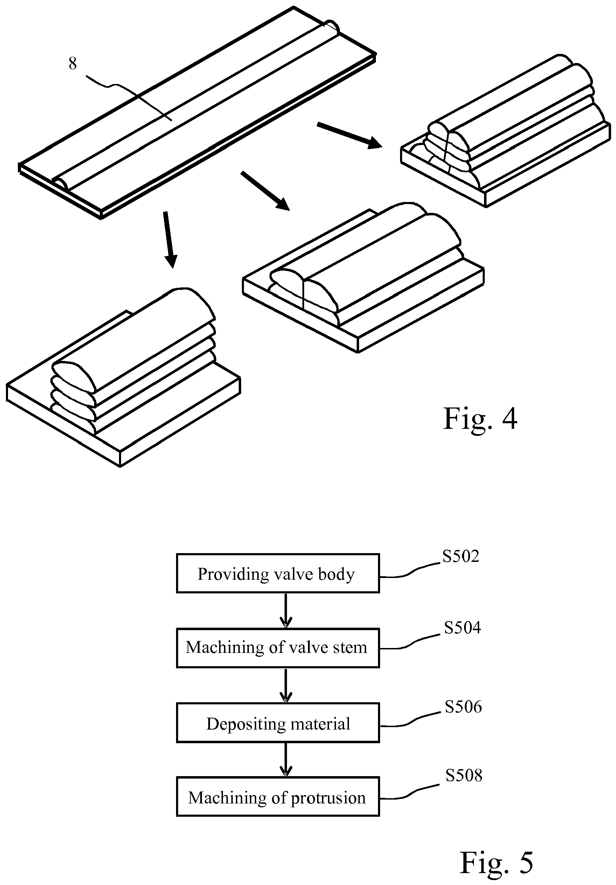

Fig. 4 illustrates the built-up process of a protrusion, which is done by depositing one or more weld seam 8 on a surface using the welding process. In a certain range the shape of the at least one protrusion can be determined by adjusting the process parameters of the welding process, e.g. by the material depositing rate, welding speed or width of the welding area. For higher and/or wider shapes several weld seams 10 are superimposed. For example several weld seams can be put on top of each other in order to increase the height of the protrusion (e.g. the 1-1-1-1 configuration in the figure). A wider protrusion can be obtained by depositing several weld seams parallel next to each other on the surface (e.g. 2 or 3 in the figure resulting in 2-2 and 3-2-2-2 configurations). The height of the wider protrusion is accordingly increased by depositing several weld seams next to each other on top of a lower layer of weld seams. The width of the protrusion can be varied by varying the number of weld seams in each layer (as an example a 3-2-2-2 configuration is shown in the figure), this can be utilized to obtain a tapered protrusion. The height of one protrusion can be varied by having sections with different numbers of superimposed weld seam layers along the protrusion.

Using this technique it is possible to build-up protrusions having a variety of shapes and technical properties, including the shapes and technical properties described above, in particular wings and ribs. The versatility of the method allows forming protrusions different from wings and ribs, e.g. corrugated shapes or raised portions having, when viewed in radial direction, not an elongated shape but a rounded, circular or rectangular shape covering a part of the valve stem.

It is further possible to vary the material of the at least one protrusion within the protrusion by providing and using different materials having different physical/technical properties for different weld seams; see above for a list of preferred materials. As an example a material of high heat resistance can be used on a side of the protrusion facing the combustion chamber and a material of high heat conductivity on the opposite side facing away from the combustion chamber. In the same way materials of different hardness, corrosion resistance, ductility, ... can be used for different weld seams. Since the material can be varied with each weld seam, a variation of the material within the at least one protrusion is possible with the height as well as with the width.

The outer surface of the valve body, in particular of the stem, can be machined before the process of forming at least one protrusion in order to prepare it for the welding. Preferably the step of depositing material is followed by machining the surface of the poppet valve, in particular the surface of the at least one protrusion. The final shape of the at least one protrusion and the desired surface finish of the valve can be obtained in this way. In both cases (before/after the depositing step) machining may include grinding, turning, milling, shot blasting and tribo-finishing.

Fig. 5 shows a flow-chart of the method according to the present invention. The two main steps are providing S502 a valve body (having a valve stem and a valve head) and depositing S506 material on an outer surface of the valve stem. Wherein providing the valve body may include producing the valve body using a method known in the art and wherein the deposition of material is done using the cladding method as described above. The figure shows two possible additional steps, namely, a machining S504 of the valve stem before the step of depositing material and a machining S508 of the protrusion after the step of depositing material.

It should be clear to the skilled person that different aspects of the method can be combined in order to obtain a poppet valve having one or more protrusions on the stem, wherein the protrusion(s) can be formed to obtain a poppet valve having desired technical properties, i.e. shape, material, surface finish, ... of the at least one protrusion.

## Claims

1. A poppet valve for a combustion engine comprising
a valve body having a valve stem (2) and a valve head (4); and
at least one protrusion (6) having the shape of a wing located on an outer surface of said valve stem (2);
wherein said at least one protrusion (6) is formed by at least one weld seam (8) obtained by depositing material on said outer surface of said valve stem (2) using a welding process, **characterized in that** said at least one protrusion (6) comprises several weld seams (8) which are superimposed.

2. The poppet valve according to claim 1, wherein the material of said at least one protrusion (6) is different from the material of said valve body.

3. The poppet valve according to any one of the preceding claims, wherein said at least one protrusion (6) comprises weld seams (8) of different materials.

4. The poppet valve according to any one of the preceding claims, wherein the height of said wing (6) varies along a length direction of said wing.

5. The poppet valve according to any one of the preceding claims, wherein the width of said wing (6) varies along a length and/or height direction of said wing.

6. The poppet valve according to any one of the preceding claims, wherein said at least one wing (6) is inclined with respect to an axial direction.

7. A method for production of a poppet valve for a combustion engine, comprising:
providing a valve body (S502) having a valve stem (2) and a valve head (4); and
depositing material (S506) on an outer surface of said valve stem (2) using a welding process, such that at least one protrusion (6) having the shape of a wing is formed by at least one weld seam (8), and
**characterized by** superimposing several weld seams in order to form said at least one protrusion (6).

8. The method according to claim 7, wherein the material is provided in the form of a powder material and said welding process comprises laser welding.

9. The method according to any one of the claims 7 - 8, wherein the material of said at least one protrusion (6) is different from the material of said valve body.

10. The method according to claim any one of the claims 7-9, further comprising providing different materials and forming weld seams (10) of different materials.

11. The method according to any one of the claims 7 - 10, further comprising machining (S504) of said valve stem (2) before said step of depositing material.

12. The method according to any one of the claims 7 - 11, further comprising machining (S508) of said at least one protrusion (6) after said step of depositing material.

## Patentansprüche

1. Sitzventil für einen Verbrennungsmotor, das Folgendes umfasst
einen Ventilkörper mit einem Ventilschaft (2) und einem Ventilkopf (4); und
mindestens einen Vorsprung (6) in Form eines Flügels, der sich an einer Außenfläche des Ventilschafts (2) befindet;
wobei der mindestens eine Vorsprung (6) durch mindestens eine Schweißnaht (8) geformt ist, die durch Auftragen von Material auf die Außenfläche des Ventilschafts (2) unter Verwendung eines Schweißprozesses erhalten wird, **dadurch gekennzeichnet ist, dass** der mindestens eine Vorsprung (6) mehrere übereinanderliegende Schweißnähte (8) umfasst.

2. Sitzventil nach Anspruch 1, wobei sich das Material des mindestens einen Vorsprungs (6) von dem Material des Ventilkörpers unterscheidet.

3. Sitzventil nach einem der vorangehenden Ansprüche, wobei der mindestens eine Vorsprung (6) Schweißnähte (8) aus verschiedenen Materialien umfasst.

4. Sitzventil nach einem der vorangehenden Ansprüche, wobei die Höhe des Flügels (6) entlang einer Längsrichtung des Flügels variiert.

5. Sitzventil nach einem der vorangehenden Ansprüche, wobei die Breite des Flügels (6) entlang einer Längs- und/oder Höhenrichtung des Flügels variiert.

6. Sitzventil nach einem der vorangehenden Ansprüche, wobei der mindestens eine Flügel (6) in Bezug auf eine axiale Richtung geneigt ist.

7. Verfahren zum Herstellen eines Sitzventils für einen Verbrennungsmotor, das Folgendes umfasst:
Bereitstellen eines Ventilkörpers (S502) mit einem Ventilschaft (2) und einem Ventilkopf (4); und
Auftragen von Material (S506) auf eine Außenfläche des Ventilschafts (2) unter Verwendung eines Schweißprozesses, so dass mindestens ein Vorsprung (6) mit der Form eines Flügels durch mindestens eine Schweißnaht (8) geformt ist, und
**dadurch gekennzeichnet, dass** mehrere Schweißnähte übereinandergelegt werden, um den mindestens einen Vorsprung (6) zu formen.

8. Verfahren nach Anspruch 7, wobei das Material in Form eines Pulvermaterials bereitgestellt ist und der Schweißprozess Laserschweißen umfasst.

9. Verfahren nach einem der Ansprüche 7 bis 8, wobei sich das Material des mindestens einen Vorsprungs (6) von dem Material des Ventilkörpers unterscheidet.

10. Verfahren nach einem der Ansprüche 7 bis 9, das ferner das Bereitstellen verschiedener Materialien und das Formen von Schweißnähten (10) aus verschiedenen Materialien umfasst.

11. Verfahren nach einem der Ansprüche 7 bis 10, das ferner das Bearbeiten (S504) des Ventilschafts (2) vor dem Schritt des Auftragens von Material umfasst.

12. Verfahren nach einem der Ansprüche 7 bis 11, das ferner das Bearbeiten (S508) des mindestens einen Vorsprungs (6) nach dem Schritt des Auftragens von Material umfasst.

## Revendications

1. Soupape champignon pour un moteur à combustion comprenant
un corps de soupape ayant une tige de soupape (2) et une tête de soupape (4) ; et
au moins une saillie (6) ayant la forme d'une aile située sur une surface extérieure de ladite tige de soupape (2) ;
dans laquelle ladite au moins une saillie (6) est formée par au moins un cordon de soudure (8) obtenu en déposant du matériau sur ladite surface extérieure de ladite tige de soupape (2) à l'aide d'un processus de soudage, **caractérisée en ce que** ladite au moins une saillie (6) comprend plusieurs cordons de soudure (8) qui sont superposés.

2. Soupape champignon selon la revendication 1, dans laquelle le matériau de ladite au moins une saillie (6) est différent du matériau dudit corps de soupape.

3. Soupape champignon selon l'une quelconque des revendications précédentes, dans laquelle ladite au moins une saillie (6) comprend des cordons de soudure (8) de matériaux différents.

4. Soupape champignon selon l'une quelconque des revendications précédentes, dans laquelle la hauteur de ladite aile (6) varie selon une direction de longueur de ladite aile.

5. Soupape champignon selon l'une quelconque des revendications précédentes, dans laquelle la largeur de ladite aile (6) varie selon une direction de longueur et/ou de hauteur de ladite aile.

6. Soupape champignon selon l'une quelconque des revendications précédentes, dans laquelle ladite au moins une aile (6) est inclinée par rapport à une direction axiale.

7. Procédé de fabrication d'une soupape champignon pour un moteur à combustion, comprenant :
la fourniture d'un corps de soupape (S502) ayant une tige de soupape (2) et une tête de soupape (4) ; et
le dépôt d'un matériau (S506) sur une surface extérieure de ladite tige de soupape (2) à l'aide d'un processus de soudage, de telle sorte qu'au moins une saillie (6) ayant la forme d'une aile est formée par au moins un cordon de soudure (8), et
**caractérisé par** la superposition de plusieurs cordons de soudure afin de former ladite au moins une saillie (6).

8. Procédé selon la revendication 7, dans lequel le matériau est fourni sous la forme d'un matériau en poudre et ledit processus de soudage comprend le soudage au laser.

9. Procédé selon l'une quelconque des revendications 7 à 8, dans lequel le matériau de ladite au moins une saillie (6) est différent du matériau dudit corps de soupape.

10. Procédé selon l'une quelconque des revendications 7 à 9, comprenant en outre la fourniture de différents matériaux et la formation de cordons de soudure (10) de différents matériaux.

11. Procédé selon l'une quelconque des revendications 7 à 10, comprenant en outre un usinage (S504) de ladite tige de soupape (2) avant ladite étape de dépôt de matériau.

12. Procédé selon l'une quelconque des revendications 7 à 11, comprenant en outre l'usinage (S508) de ladite au moins une saillie (6) après ladite étape de dépôt de matériau.
